# EUROPEAN PATENT SPECIFICATION

(11) **EP 3 332 671 B1**
(45) Date of publication and mention of the grant of the patent: **02.10.2019**
(21) Application number: 16833103.1
(22) Date of filing: 04.08.2016
(51) Int. Cl.: A47C 7/18, B29C 59/02, B29C 44/06, B29C 44/34, B32B 5/20, B60N 2/70, B29K 75/00

(54) **PAD FOR SEAT MADE OF A SOFT POLYURETHANE FOAM MOLDED ARTICLE**
KISSEN FÜR SITZ HERGESTELLT AUS EINEM FORMARTIKEL AUS WEICHEM POLYURETHANSCHAUMSTOFF
COUSSIN POUR SIÈGE FAIT D'UN ARTICLE MOULÉ EN MOUSSE DE POLYURÉTHANE SOUPLE

(30) Priority: 04.08.2015 JP 2015153846
(43) Date of publication of application: 13.06.2018
(73) Proprietor: Bridgestone Corporation, Tokyo 104-8340 (JP)
(72) Inventor: TAKAHASHI, Yoshiyuki, Tokyo 104-8340 (JP)
(74) Representative: Oxley, Robin John George
(86) International application number: PCT/JP2016/072940
(87) International publication number: WO 2017/022824

(56) References cited:
- WO-A1-2014/057786
- DE-A1-102004 035 198
- JP-A- H1 135 725
- JP-A- 2003 284 875
- JP-A- 2006 150 090
- US-A1- 2003 098 598
- US-A1- 2003 225 172

## Description

### [Technical Field]

The present invention relates to a seat pad that is a soft polyurethane foam molded article.

Priority is claimed on Japanese Patent Application No. 2015-153846, filed August 4, 2015.

### [Background Art]

In the related art, in a soft polyurethane foam molded article of, for example, a seat pad having a mounting surface, an invention for preventing an occupant from experiencing a so-called feeling of bottom touching in which he or she feels hardness when seated by adjusting a relationship between an amount of deflection and a reaction force is known, for example, as shown in the following Patent Document 1.

### [Citation List]

### [Patent Document]

[Patent Document 1]
Japanese Unexamined Patent Application, First Publication No. 2012-125397

Reference is also made to US 2003/098598, which discloses a seat pad according to the preamble of Claim 1.

### [Summary of Invention]

### [Technical Problem]

However, in the soft polyurethane foam molded article of the related art, if a centrifugal force (centrifugal acceleration G) is applied to a vehicle body when a vehicle travels along a curve or changes lanes, for example, the lumbar region of an occupant, a mounting object, or the like may tilt in a lateral direction and be shaken.

On the other hand, it is possible to prevent shakiness by increasing the viscoelasticity of a soft polyurethane foam. However, in this case, a cushioning property may deteriorate.

The present invention has been made in view of the above circumstances, and an object thereof is to provide a seat pad through which it is possible to maintain a favorable feeling when seated, it is possible to improve stability by reducing shakiness, and it is possible to reduce a feeling of bottom touching.

### [Solution to Problem]

A seat pad according to the present invention is attachable to a vehicle for use as a seating part and is a soft polyurethane foam molded article having a mounting surface and is obtainable by foam-molding a foaming stock solution. The soft polyurethane foam molded article includes a plurality of layered parts that form layers in a vertical direction perpendicular to the mounting surface. A plurality of foaming cells included in each of the layered parts have a ratio of a size in a lateral direction along the mounting surface with respect to a size in the vertical direction that becomes larger as the foaming cells become positioned closer to the side of the mounting surface in the vertical direction. At boundaries between the layered parts adjacent to each other in the vertical direction, the ratio of a foaming cell included in the layered part on the side of the mounting surface is lower than the ratio of a foaming cell included in the layered part positioned closer to the side of a back surface opposite to the side of the mounting surface.

### [Effects of Invention]

According to the seat pad in the present invention, it is possible to maintain a favorable feeling when seated, it is possible to improve stability by reducing shakiness, and it is possible to reduce a feeling of bottom touching.

### [Brief Description of Drawings]

Fig. 1 is a longitudinal sectional view showing a seat pad according to an embodiment of the present invention.
Fig. 2 is a diagram for explaining an aspect ratio of a foaming cell.
Fig. 3A is a sectional view of a main part of a layered part of a seat pad and is an enlarged view of an upper end on the side of a seating surface in the layered part.
Fig. 3B is a sectional view of a main part of a layered part of a seat pad and is an enlarged view of an intermediate part of the layered part.
Fig. 3C is a sectional view of a main part of a layered part of a seat pad and an enlarged view of a lower end on the side of a back surface in the layered part.
Fig. 4 is a longitudinal sectional view of a mold for producing a layered part of a seat pad.
Fig. 5 is a graph showing a relationship between a vertical position and an aspect ratio in a layered part of a seat pad.
Fig. 6 is a graph showing a relationship between a vertical position and a hardness ratio in a layered part of a seat pad.
Fig. 7 is a diagram showing a relationship between a lateral force and a roll angle in a layered part of a seat pad.

### [Description of Embodiments]

A seat pad according to an embodiment of the present invention will be described below with reference to the drawings.

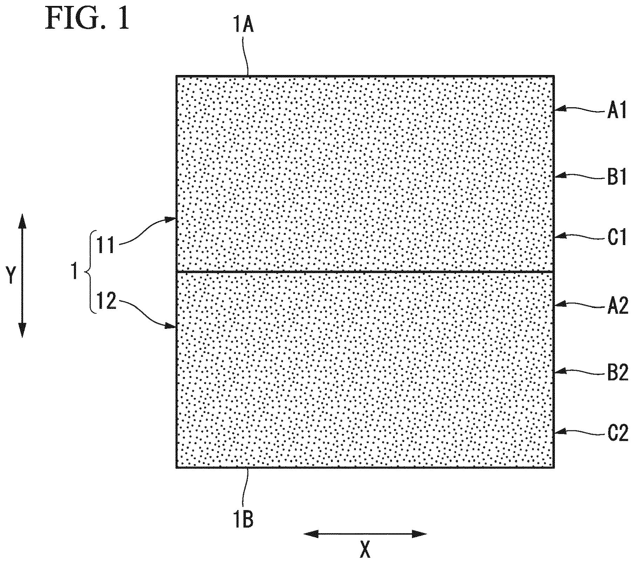

As shown in Fig. 1, a seat pad 1 of the present embodiment is a soft polyurethane foam molded article that is used for a seat (seating part) attached to, for example, an automobile (vehicle), has a seating surface 1A (mounting surface) and a back surface 1B that is positioned on the side opposite to the seating surface 1A in a vertical direction Y perpendicular to the seating surface 1A, and is obtained by foam-molding a foaming stock solution. The foaming stock solution contains, for example, a polyol component, a polyisocyanate component, a cross-linking agent, a foaming agent, and a catalyst.

In the present embodiment, the seat pad 1 includes a plurality of layered parts 11 and 12 which form layers in the vertical direction Y. While two layered parts 11 and 12 are shown in the example, three or more layered parts may be provided.

The layered parts 11 and 12 are each separately formed of one different type of material.

That is, the seat pad 1 is formed by laminating the layered parts 11 and 12 obtained by foam-molding a foaming stock solution separately. Alternatively, the seat pad 1 may be formed of all of an integrated plurality of layered parts 11 and 12 by foam-molding one type of foaming stock solution.

Between the layered parts 11 and 12 adjacent to each other in the vertical direction Y, the hardness of the entire layered part 12 on the side of the back surface 1B in the vertical direction Y is higher than the hardness of the entire layered part 11 on the side of the seating surface 1A in the vertical direction Y. The hardness of all of the layered parts 11 and 12 in the vertical direction Y can be measured according to a D method defined in Japan Industrial Standard JIS K 6400(2004).

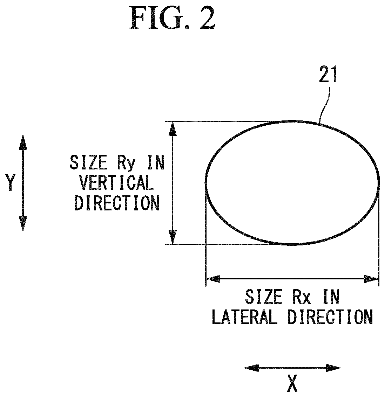

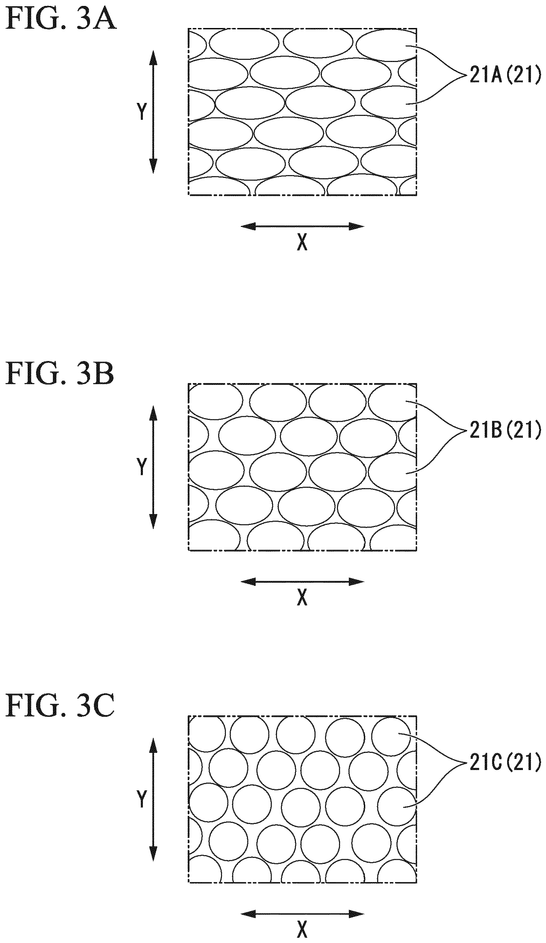

As shown in Fig. 2 and Fig. 3, a plurality of foaming cells 21 included in the layered parts 11 and 12 have a ratio of a size Rx in a lateral direction X along the seating surface 1A with respect to a size Ry in the vertical direction Y, that is, a value obtained by dividing the size Rx in the lateral direction X by the size Ry in the vertical direction Y (hereinafter referred to as an aspect ratio) that becomes larger moving closer to the side of the seating surface 1A in the vertical direction Y. Here, in the shown example, while the lateral direction X is shown as a left and right direction in Fig. 1 to Fig. 3 for convenience, the lateral direction X is not limited to this direction, and may be, for example, a depth direction along the seating surface 1A in the plane of the paper.

In the plurality of layered parts 11 and 12, a rate of increase in the aspect ratio of the foaming cells 21 toward the side of the seating surface 1A in the vertical direction Y is the same in the layered parts 11 and 12 over the entire length in the vertical direction Y. Therefore, in the plurality of layered parts 11 and 12, it is possible to exclude having a part in which the hardness significantly varies in the vertical direction Y, and it is unlikely for discomfort of a seated occupant to be caused. The term "the same" herein may refer to values that are exactly the same or values that are slightly different in the vertical direction Y.

The layered parts 11 and 12 are each formed by foam-molding one type of foaming stock solution. Alternatively, the layered parts 11 and 12 may be formed by laminating a plurality of thin layered parts obtained by foam-molding a foaming stock solution.

In the plurality of layered parts 11 and 12, at upper ends A1 and A2 on the side of the seating surface 1A shown in Fig. 1, as shown in Fig. 3A, the aspect ratio is larger than 1, the size Rx in the lateral direction X is larger than the size Ry in the vertical direction Y, and foaming cells 21A have a flat shape long in the lateral direction X. That is, the foaming cells 21A of the upper ends A1 and A2 are likely to be deflected in the vertical direction Y and are unlikely to be deformed in the lateral direction X, and a cushioning property in the vertical direction Y is that of feeling soft.

The aspect ratio of the foaming cells 21A included in the upper ends A1 and A2 of the layered parts 11 and 12 is preferably set to be in a range of 1.4 to 1.5. Here, this numeric value refers to the aspect ratio of foaming cells other than foaming cells that are formed in a part in contact with an inner surface of a cavity C to be described below or in the vicinity thereof so that foaming is suppressed among the foaming cells 21A included in the upper ends A1 and A2 of the layered parts 11 and 12.

In the plurality of layered parts 11 and 12, in central parts B1 and B2 in the vertical direction Y as shown in Fig. 1, as shown in Fig. 3B, the aspect ratio is larger than 1, and is a value that is lower than the aspect ratio of the upper ends A1 and A2, the size Rx in the lateral direction X is slightly larger than the size Ry in the vertical direction Y, and there is a flat shape that is slightly horizontally longer compared to a circle. That is, compared to the foaming cells 21A of the upper ends A1 and A2, foaming cells 21B of the central parts B1 and B2 are unlikely to be deflected in the vertical direction Y and a cushioning property of the vertical direction Y is that of feeling slightly hard.

In the plurality of layered parts 11 and 12, at lower ends C1 and C2 on the side of the back surface 1B of the seat pad 1 shown in Fig. 1, as shown in Fig. 3C, the aspect ratio is a value that is close to 1, and there is a circular shape in which the size Rx in the lateral direction X and the size Ry in the vertical direction Y are substantially the same. In foaming cells 21C of the lower ends C1 and C2, compared to the foaming cells 21A and 21B of the upper ends A1 and A2 and the central parts B1 and B2, they are unlikely to be deformed and have the same hardness regardless of a direction in which a force is applied and they feel hard.

The aspect ratio of the foaming cells 21C included in the lower ends C1 and C2 of the layered parts 11 and 12 is preferably set to be in a range of 0.95 to 1.05. Here, this numeric value refers to the aspect ratio of foaming cells other than foaming cells that are formed in a part in contact with an inner surface of a cavity C to be described below or in the vicinity thereof so that foaming is suppressed among the foaming cells 21C included in the lower ends C1 and C2 of the layered parts 11 and 12.

The shape of the foaming cells 21 included in the plurality of layered parts 11 and 12 gradually and continuously changes from a horizontally long shape to a substantially circular shape in the vertical direction Y from the side of the seating surface 1A toward the side of the back surface 1B. The volumes of the foaming cells 21A included in the upper ends A1 and A2 of the layered parts 11 and 12 and the foaming cells 21C included in the lower ends C1 and C2 are lower than the volume of the foaming cells 21B included in the central parts B1 and B2 positioned therebetween. That is, the volume of the foaming cells 21 gradually increases separately in the vertical direction Y from the upper ends A1 and A2 and the lower ends C1 and C2 toward the central parts B1 and B2 therebetween.

In addition, in the plurality of layered parts 11 and 12, the sizes and features such as a numeric value of the aspect ratio, a rate of change of the aspect ratio of the above-described foaming cells 21, and the like are the same. However, the present invention is not limited thereto, and the sizes, the features of the foaming cells 21, and the like may be different from each other in the plurality of layered parts 11 and 12.

Thus, in the present embodiment, in the boundaries C1 and A2 between the layered parts 11 and 12 adjacent to each other in the vertical direction Y, the aspect ratio of the foaming cells 21C included in the layered part 11 on the side of the seating surface 1A is lower than the aspect ratio of the foaming cells 21A included in the layered part 12 positioned closer to the side of the back surface 1B. In the shown example, as described above, the aspect ratio of the foaming cells 21C included in the lower end C1 in the layered part 11 on the side of the seating surface 1A is lower than the aspect ratio of the foaming cells 21A included in the upper end A2 in the layered part 12 on the side of the back surface 1B.

In the boundaries C1 and A2, the hardness of the layered part 11 on the side of the seating surface 1A in the vertical direction Y is equal to or lower than the hardness of the layered part 12 on the side of the back surface 1B in the vertical direction Y. Here, such a hardness in the vertical direction Y in a part of the layered parts 11 and 12 in the vertical direction Y can be measured when evaluation samples are cut out from the layered parts 11 and 12 at each of positions in the vertical direction Y and a measurement method to be described below is applied to the evaluation samples. In addition, in the shown example, the hardness of the lower end C1 in the layered part 11 on the side of the seating surface 1A in the vertical direction Y is equal to or lower than the hardness of the upper end A2 in the layered part 12 on the side of the back surface 1B in the vertical direction Y.

In addition, in the layered parts 11 and 12, the hardness gradually increases from the upper ends A1 and A2 on the side of the seating surface 1A in the vertical direction Y toward the lower ends C1 and C2 on the side of the back surface 1B.

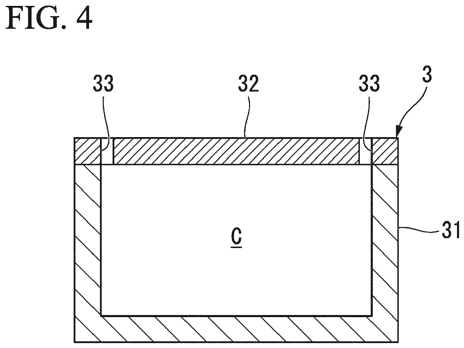

Here, the seat pad 1 configured as described above is formed by separately forming the plurality of layered parts 11 and 12 first using, for example, a mold 3 shown in Fig. 4, and then laminating these layered parts 11 and 12.

The mold 3 is formed in a box shape including a lower mold 31 and an upper mold 32 and an internal space thereof serves as the cavity C that forms the seat pad 1. The upper mold 32 is a lid that closes an upper opening of the lower mold 31 and an air vent hole 33 is formed to vertically penetrate an outer circumferential part thereof.

Here, a soft polyurethane foam that is a material of the seat pad 1 will be described.

The exemplary embodiment of a soft polyurethane foam is a soft polyurethane foam that is obtained by foam-molding a foaming stock solution containing a polyol, a polyisocyanate, a cross-linking agent, a foaming agent, and a catalyst. Materials of the foaming stock solution have the following features (A) to (C).

(A) A polyether polyol whose weight-average molecular weight (Mw) is 3,000 to 12,000 and whose number of functional groups (number of hydroxyl groups) is 3 to 4 is contained as a polyol component.
(B) A molar ratio of ethylene oxide groups/propylene oxide groups in the entire compound (all the cross-linking agent) contained in a foaming stock solution as a cross-linking agent component is 100 or more.
(C) A diphenylmethane diisocyanate (MDI) is contained with an isocyanate equivalent of 70 or more as a polyisocyanate.

### <Polyol component>

As a polyol component of the foaming stock solution, a polyether polyol whose weight-average molecular weight Mw is 3,000 to 12000 and whose number of functional groups (number of hydroxyl groups) is 3 to 4 is contained. As the polyether polyol, a polyether polyol obtained by ring-opening polymerization of an alkylene oxide is preferable since it has favorable reactivity. Examples of the alkylene oxide include propylene oxide (PO), and ethylene oxide (EO). One or more types of alkylene oxide may be used as a material of the polyether polyol.

As the polyether polyol of the foaming stock solution, a polyether polyol obtained with a combination of PO and EO is appropriate in consideration of raw material activity. A blending ratio (a molar ratio) between PO and EO is not particularly limited. For example, as the EO/PO (the molar ratio), 8/92 to 25/75 is preferable, and 13/87 to 20/80 is more preferable. When the EO/PO (the molar ratio) is within this range, it is possible to easily generate a polyether polyol having favorable reactivity.

The number of hydroxyl groups (functional groups) included in one molecule of a polyether polyol of the foaming stock solution is preferably 3 to 4. Within such an appropriate range, a soft polyurethane foam having a moderate viscosity in the foaming stock solution and excellent physical properties is obtained. As an optional component, in addition to the polyether polyol of (A), a polyether polyol having two functional groups may be used in combination therewith.

A weight-average molecular weight (Mw) of the polyether polyol of the foaming stock solution is preferably 3,000 to 12,000, more preferably 3,000 to 8,000, and most preferably 5,000 to 8,000. When the weight-average molecular weight of the polyether polyol is 12,000 or less, a viscosity of the foaming stock solution is not excessively high and stirring efficiency is improved. On the other hand, when the weight-average molecular weight of the polyether polyol is 3,000 or more, a soft polyurethane foam having a favorable rebound resilience is obtained. Here, the weight-average molecular weight (Mw) is a value that is calculated as a polystyrene conversion value by gel permeation chromatography (a GPC method). Here, as an optional component, in addition to the polyether polyol of (A), a polyether polyol whose weight-average molecular weight is larger than 8,000 and 12,000 or less may be used in combination therewith.

A degree of unsaturation of the polyether polyol of the foaming stock solution is preferably 0.03 milliequivalents/g or less. When the degree of unsaturation is 0.03 milliequivalents/g or less, a soft polyurethane foam having favorable physical properties such as durability is obtained. Here, the "degree of unsaturation" refers to a total degree of unsaturation (milliequivalents/g) that is measured using a method of titrating acetate that is liberated when mercuric acetate acts on unsaturated bonds in a specimen with potassium hydroxide in compliance with Japan Industrial Standard JIS K 1557-1970.

One or more types of polyether polyol may be contained in the foaming stock solution as the polyol component.

When one type of polyether polyol is contained in the foaming stock solution as the polyol component, a polyether polyol whose weight-average molecular weight is 7,000 or more and whose number of functional groups is 4 is preferably contained. When the polyether polyol is contained, it is possible to significantly decrease the above-described feeling of shakiness when a soft polyurethane foam obtained by foam-molding is used as a seat pad.

In order for desired physical properties to be easily provided to the soft polyurethane foam obtained by foam-molding the foaming stock solution, as a total content of the one, or two or more types of polyether polyol corresponding to the polyether polyol of (A) with respect to a total mass of the polyol components contained in the foaming stock solution, 60 mass% or more is preferable, 70 to 100 mass% is more preferable, 80 to 100 mass% is still more preferable, and 85 to 100 mass% is most preferable.

As the polyol component of the foaming stock solution, in addition to the polyether polyol, a polymer polyol may be used in combination therewith. As the polymer polyol, a polymer polyol that is generally used for a polyurethane foam molded article can be applied. For example, a polymer polyol obtained by graft copolymerization of a polymer component such as a polyacrylonitrile and an acrylonitrile-styrene copolymer with a polyether polyol that includes a polyalkylene oxide and has a weight-average molecular weight Mw of 3,000 to 8,000, and more preferably, 4,000 to 7,000, may be exemplified. As an alkylene oxide serving as a raw material of the polyalkylene oxide, an alkylene oxide containing propylene oxide (PO) as a functional group (a polymerizable group) is preferable. Alkylene oxides containing only propylene oxide or alkylene oxides containing both propylene oxide and ethylene oxide (EO) are more preferable. In addition, a content of the polymer component with respect to a total mass of the polymer polyols is preferably 25 to 50 mass%.

As a mixing ratio when a polyether polyol and a polymer polyol are mixed in as the polyol component of the foaming stock solution, 70/30 to 99/1 is preferable, 80/20 to 99/1 is more preferable, and 85/15 to 99/1 is most preferable as a mass ratio of polyether polyol/polymer polyol. Within the above range, it is easy to obtain a soft polyurethane foam having desired physical properties.

### <Polyisocyanate component>

As a polyisocyanate component of the foaming stock solution, diphenylmethane diisocyanate is contained with an isocyanate equivalent of 70 or more.

The diphenylmethane diisocyanate (MDI) is a polyisocyanate component that is generally used in the field of polyurethane foams. Specific examples of MDI include 4,4-diphenylmethane diisocyanate (4,4-MDI), which is generally referred to as monomeric MDI, 2,4-diphenylmethane diisocyanate (2,4-MDI), 2,2-diphenylmethane diisocyanate (2,2-MDI), polymeric MDI, and crude MDI.

One type of MDI may be contained alone or two or more types of MDI may be contained in the foaming stock solution.

The term "isocyanate equivalent" indicating a total amount of polyisocyanate contained in the foaming stock solution refers to a molar ratio of isocyanate groups when an active hydrogen amount (moles) in the foaming stock solution is set to 100.

The isocyanate equivalent derived from MDI contained in the foaming stock solution is at least 70 or more, preferably 70 to 120, and more preferably 80 to 100. When the isocyanate equivalent is 70 or more, it is possible to prevent stirring failure of the foaming stock solution. When the isocyanate equivalent is 120 or less, it is possible to prevent the occurrence of foam disintegration.

As the optional component, in addition to the MDI of (C), a known polyisocyanate component other than the MDI may be added in a small amount. For example, tolylene diisocyanate (TDI), triphenyl diisocyanate, xylene diisocyanate, polymethylene polyphenylene polyisocyanate, hexamethylene diisocyanate, and isophorone diisocyanate may be used.

In order for desired physical properties to be easily provided to the soft polyurethane foam obtained by foam-molding the foaming stock solution, as a total content of the one, or two or more types of diphenylmethane diisocyanate of (C) with respect to a total mass of the polyisocyanate components contained in the foaming stock solution, 70 mass% or more is preferable, 80 to 100 mass% is more preferable, 90 to 100 mass% is still more preferable, and 95 to 100 mass% is most preferable.

In addition, as a content of pure MDI as the diphenylmethane diisocyanate of (C) with respect to a total mass of the polyisocyanate components contained in the foaming stock solution, 40 mass% or more is preferable, 50 to 90 mass% is more preferable, 55 to 85 mass% is still more preferable, and 60 to 80 mass% is most preferable.

### <Cross-linking agent component>

In order for the soft polyurethane foam obtained by foam-molding the foaming stock solution to have desired physical properties, as a cross-linking agent component of the foaming stock solution, a cross-linking agent having higher reactivity with respect to the polyisocyanate component than water is preferably contained as a main component. Generally, reactivity with respect to the polyisocyanate component decreases in an order of glycerin, a cross-linking agent (an EO-based cross-linking agent) including an ethylene oxide group, water, and a cross-linking agent (a PO-based cross-linking agent) including a propylene oxide group. Based on this, as a molar ratio (the number of moles of EO groups/the number of moles of PO groups) between the EO groups and the PO groups contained in one, or two or more types of all compounds that are contained as a cross-linking agent in the foaming stock solution, 100 or more is preferable, 105 or more is more preferable, and 110 or more is most preferable. The higher molar ratios are more preferable. That is, it is preferable that a cross-linking agent including a PO group be substantially not contained in the foaming stock solution.

Here, the ethylene oxide group (EO group) refers to a group having a monovalent bond since one hydrogen atom of ethylene oxide has been removed. The propylene oxide group (PO group) refers to a group having a monovalent bond since one hydrogen atom of propylene oxide has been removed.

As a specific cross-linking agent component, a known cross-linking agent used in the field of polyurethane foams can be applied. Generally, a molecular weight of the cross-linking agent is preferably 1,000 or less. In consideration of an increase of the molar ratio of EO groups/PO groups, a commercially available cross-linking agent represented by "EO (groups)/PO (groups)=100/0" is preferable.

One or more types of the cross-linking agent may be contained in the foaming stock solution. When a cross-linking agent whose molar ratio of EO groups/PO groups is 100 or more and glycerin are used in combination therewith, a mass ratio of the cross-linking agent/the glycerin is preferably 10:1 to 1:10, more preferably 5:1 to 1:5, and most preferably 2:1 to 1:2.

A total content of the cross-linking agent component contained in the foaming stock solution with respect to 100 parts by mass of the polyol component is preferably 0.5 to 10 parts by mass and more preferably 1 to 5 parts by mass. Within an upper limit or less of this range, it is possible to prevent there being an excessive number of independent pores, molding problems, and prevent foams from disintegrating. Within a lower limit or more of this range, an effect of the cross-linking agent is sufficiently obtained.

### <Foaming agent component>

As a foaming agent component of the foaming stock solution, water is preferably used. Since water reacts with polyisocyanate and generates carbon dioxide gas, it serves as a foaming agent.

As a content of water in the foaming stock solution with respect to 100 parts by mass of the polyol component, 1 to 7 parts by mass is preferable, and 2 to 5 parts by mass is more preferable. Within this range, a soft polyurethane foam having desired physical properties is easily obtained. In addition, it is possible to prevent a thermal compression residual strain characteristic of the obtained soft polyurethane foam from deteriorating.

### <Catalyst component>

As a catalyst component of the foaming stock solution, a known catalyst used in the field of polyurethane foams is used. Examples of the known catalyst include an amine catalyst and a tin catalyst.

Generally, the known catalysts are broadly classified into resin catalysts that promote resinification of a polyurethane and blowing catalysts that promote foaming of a polyisocyanate component.

An appropriate resin catalyst is a tertiary amine catalyst that specifically promotes a reaction between a polyisocyanate and a polyol, and is not particularly limited. For example, triethylenediamine, 1,8-diazabicyclo[5.4.0]undecene-7, imidazoles such as 1-methylimidazole, 1,2-dimethylimidazole, and 1-isobutyl-2-methylimidazole, and 1,1'-(3-(dimethylamino)propyl)imino)bis(2-propanol) may be used. In addition, an appropriate blowing catalyst is a tertiary amine catalyst that specifically promotes a reaction between isocyanate and water and effectively generates carbon dioxide gas, and is generally used to improve fluidity of a foam and dimensional stability. The blowing catalyst is not particularly limited, and bis(2-dimethylaminoethyl) ether, N,N,N',N",N"-pentamethyldiethylenetriamine, and N,N,N',N",N'",N'"-hexamethyltriethylenetetramine may be exemplified.

In the foaming stock solution, at least a resin catalyst from a resin catalyst and a blowing catalyst is preferably contained as the catalyst component.

A mass ratio of the resin catalyst:the blowing catalyst contained in the foaming stock solution is preferably 100:0 to 100:100, more preferably 100:0 to 100:50 and most preferably 100:0 to 100:20.

A content of 1,1'-(3-(dimethylamino)propyl)imino)bis(2-propanol) serving as the resin catalyst with respect to 100 parts by mass of the polyol component is preferably 0.1 to 2.0 parts by mass, more preferably 0.2 to 1.5 parts by mass, still more preferably 0.3 to 1.2 parts by mass, and most preferably 0.4 to 0.9 parts by mass. Within this range, a soft polyurethane foam having desired physical properties is easily obtained.

When 1,1'-(3-(dimethylamino)propyl)imino)bis(2-propanol) serving as the resin catalyst and the blowing catalyst are used in combination therewith, a total content of both catalysts with respect to 100 parts by mass of the polyol component is preferably 0.1 to 1.5 parts by mass, more preferably 0.4 to 1.2 parts by mass and most preferably 0.7 to 1.0 parts by mass. Within this range, a soft polyurethane foam having desired physical properties is easily obtained.

As the amine catalyst, in order to promote a resinification (gelation) reaction between polyols and polyisocyanates and promote urethane bond generation, a resin catalyst having a ratio of a blowing catalyst constant with respect to a gelation catalyst constant of 10×10⁻¹ or less is preferable.

Here, the gelation catalyst constant is a constant that determines a speed of a resinification reaction between polyols and polyisocyanates. As a value thereof increases, a crosslink density of a foam body increases, and mechanical physical properties of the foam body improve. Specifically, a reaction constant of a gelation reaction between tolylene diisocyanate and diethylene glycol is used. On the other hand, the blowing catalyst constant is a constant that determines a speed of a blowing reaction between polyisocyanates and water. As a value thereof increases, connection between cells of the foam body increases. Specifically, a reaction constant of a blowing reaction between tolylene diisocyanate and water is used. A ratio between the two catalyst constants shows the balance between both the catalysts.

Examples of appropriate amine catalysts and specific examples of the resin catalyst are exemplified below.

Specific examples of the resin catalyst including the above-described catalyst include tertiary amines such as triethylenediamine (TEDA), a mixture of triethylenediamine and a polypropylene glycol, N,N,N',N'-tetramethylethylenediamine, N,N, N ',N '-tetramethylpropylenediamine, N ,N ,N',N",N "-pentamethyl-(3 -aminopropyl)ethylenediamine, N,N,N',N",N"-pentamethyldipropylenetriamine, N,N,N',N'-tetramethylguanidine, and 135-tris(N,N-dimethylaminopropyl)hexahydro-S-triazine, imidazoles such as 1-methylimidazole, 1,2-dimethylimidazole, and 1-isobutyl-2-methylimidazole, and additionally N,N,N',N'-tetramethylhexamethylenediamine, N-methyl-N'-(2-dimethylaminoethyl)piperazine, N,N'-dimethylpiperazine, N-methylpiperazine, N-methylmorpholine, and N-ethylmorpholine.

A content of the amine catalyst in the foaming stock solution with respect to 100 parts by mass of the polyol component is preferably 0.1 to 0.4 parts by mass, more preferably 0.2 to 0.4 parts by mass, and most preferably 0.3 to 0.4 parts by mass. Within the lower limit of 0.1 parts by mass of this range or more, it is possible to prevent foams from disintegrating. Within the upper limit of 0.4 parts by mass of this range or less, it is possible to prevent the occurrence of shrinkage due to independent pores.

Specific examples of the tin catalyst include known organic tin catalysts such as stannous octoate, stannous laurate, dibutyltin dilaurate, dibutyltin maleate, dibutyltin diacetate, dioctyltin diacetate, and tin octylate.

A content of the tin catalyst in the foaming stock solution with respect to 100 parts by mass of the polyol component is preferably 0.01 to 0.5 parts by mass, more preferably 0.01 to 0.4 parts by mass, and most preferably 0.01 to 0.2 parts by mass.

### <Foam stabilizer component>

A foam stabilizer may be contained in the foaming stock solution. As the foam stabilizer, a known foam stabilizer used in the field of polyurethane foams can be applied. For example, a silicone-based foam stabilizer, an anionic foam stabilizer, and a cationic foam stabilizer may be used. A foam stabilizer having a hydroxyl group at a molecular chain terminal is included in such foam stabilizers.

A content of the foam stabilizer in the foaming stock solution with respect to 100 parts by mass of the polyol component is preferably 0.1 to 5 parts by mass, more preferably 0.2 to 3 parts by mass, and most preferably 0.3 to 0.8 parts by mass. Generally, at a content of 5 parts by mass or less, an effect as the foam stabilizer is sufficiently obtained. In addition, at a content of 0.1 parts by mass or more, stirability properties of a polyol component and a polyisocyanate component increase, and a soft polyurethane foam having desired physical properties is easily obtained.

### <Other optional components>

Various additives can be blended into the foaming stock solution as necessary. For example, a coloring agent such as a pigment, a chain extender, a filling material such as calcium carbonate, a flame retardant, an antioxidant, an ultraviolet absorbing agent, a light stabilizer, a conductive substance such as carbon black, and an antibacterial agent can be blended in. A blending amount of various additives is appropriately regulated according to applications and purposes.

### <Method of preparing foaming stock solution>

A method of preparing a foaming stock solution is not particularly limited. For example, a method of preparing a foaming stock solution in which a mixture of the remaining components other than a polyisocyanate component (hereinafter abbreviated as a "polyol mixture") is prepared and then mixed with the polyisocyanate component may be provided.

When the polyol mixture is prepared, in order to reduce contact of water serving as a foaming agent with a catalyst component, preferably, the catalyst component is first mixed with the polyol component, and a foam stabilizer component, a cross-linking agent component, and an optional component are then mixed in as necessary, and water serving as a foaming agent is finally mixed in.

Then, in a process in which foam-molding of a soft polyurethane foam is performed, it is preferable to prepare a foaming stock solution by mixing the polyol mixture with the polyisocyanate component.

A viscosity at a liquid temperature of 25 °C of the prepared polyol mixture is preferably 2,400 mPa·s or less, and more preferably 1,800 mPa·s or less. Within such an appropriate viscosity range, stirring efficiency of the foaming stock solution is favorable, a sufficient amount of foam is uniformly obtained in all the foaming stock solution and a soft polyurethane foam having desired physical properties (a foam molded article) is easily obtained.

A method of foam-molding the soft polyurethane foam by using the foaming stock solution is not particularly limited. For example, a known method of foam-molding in which a foaming stock solution is injected into a cavity that is formed in a mold can be applied.

In the above known method, in order to prevent components of the foaming stock solution from being separated, the above-described components are preferably mixed to prepare the foaming stock solution immediately before the foaming stock solution is injected into the cavity. A liquid temperature of the foaming stock solution to be injected is preferably 10 to 50 °C, more preferably 20 to 40 °C and most preferably 25 to 35 °C. A temperature of the mold is preferably 40 to 80 °C, more preferably 50 to 70 °C, and most preferably 60 to 65 °C. When the liquid temperature of the foaming stock solution and the temperature of the mold are within the above appropriate ranges, appropriate foaming is obtained. Subsequently to the foaming, after curing is performed in the mold, a target soft polyurethane foam is obtained by demolding. A known film removal treatment may be further performed on the soft polyurethane foam obtained here.

### <Hardness distribution of soft polyurethane foam in vertical direction>

Regardless of the method of foam-molding, the soft polyurethane foam according to the present invention has a hardness that tends to gradually increase from the lower side to the upper side in the vertical direction during foam-molding. That is, a hardness distribution of the soft polyurethane foam according to the present invention in the vertical direction Y shows a continuously increasing trend or decreasing trend. Here, when viewed in a direction from the lower side to the upper side in the vertical direction during foam-molding of the soft polyurethane foam, the hardness distribution shows an increasing trend. However, when viewed in a direction from the upper side to the lower side in the vertical direction during foam-molding of the same soft polyurethane foam, the hardness distribution shows a decreasing trend.

While a mechanism by which the soft polyurethane foam according to the present invention exhibits the above hardness distribution is not known in detail, combinations of components of the foaming stock solution are considered to be factors. In particular, a main polymerizable group (a reactive group) of the cross-linking agent component being an EO group, lack of PO groups to an extent at which a cross-linking effect is substantially exhibited in the cross-linking agent component, inclusion of MDI as a large part of the polyisocyanate component, and inclusion of a small amount or none of TDI are considered to be major factors. In addition, inclusion of glycerin in the cross-linking agent component and inclusion of a resin catalyst in the catalyst component are also considered to greatly contribute to the above hardness distribution being exhibited.

In addition, when the soft polyurethane foam that exhibits the above hardness distribution is cut in the vertical direction Y, it is observed that a degree of flatness of a foaming cell shape occurring in the cross section, that is, the above aspect ratio, tends to gradually increase from the upper end to the lower end during foam-molding. In the soft polyurethane foam obtained by foam-molding, a foaming cell that is positioned at the lower end during foam-molding shows a horizontally long flat shape (elliptical shape) that collapses in the direction of gravity, a degree of flatness in a foaming cell that is positioned in an intermediate part is comparatively reduced and the shape approaches a circle, and a degree of flatness in a foaming cell that is positioned at the upper end is further reduced and the shape tends to be closer to a circle. In this manner, a change in the shape of the foaming cell 21 occurring in the cross section of the soft polyurethane foam in the vertical direction Y is considered to have a correlation with a trend of the hardness distribution.

Here, the "softness" of the soft polyurethane foam according to the present invention refers to a hardness (stiffness) of an extent at which the soft polyurethane foam is deformed and recessed when the soft polyurethane foam is pressed by hand or a user sits thereon.

In addition, as another soft polyurethane foam, a soft polyurethane foam which is obtained by foam-molding of a foaming stock solution containing a polyol, a polyisocyanate, a cross-linking agent, a foaming agent, and a catalyst, and in which a polyether polyol whose weight-average molecular weight Mw is 3,000 to 12,000 and whose number of functional groups is 3 to 4 is contained as the polyol, a molar ratio of ethylene oxide groups/propylene oxide groups in all the compound contained as the cross-linking agent is 100 or more, a short chain polyol whose weight-average molecular weight is 1000 or less is contained as the cross-linking agent, and tolylene diisocyanate is contained with an isocyanate equivalent of 70 or more as the polyisocyanate can be used.

As described above, according to the seat pad 1 in the present embodiment, among the plurality of foaming cells 21 included in the plurality of layered parts 11 and 12, those positioned closer to the side of the seating surface 1A in the vertical direction Y are horizontally long. Therefore, in the plurality of layered parts 11 and 12, a relatively horizontally long foaming cell 21 that is likely to be compressed and deformed in the vertical direction Y is positioned closer to the side of the seating surface 1A, but a relatively vertically long foaming cell 21 that is unlikely to be compressed and deformed in the vertical direction Y is positioned closer to the side of the back surface 1B.

Thus, in the layered parts 11 and 12, the hardness on the side of the seating surface 1A can be set to be lower than the hardness on the side of the back surface 1B, an occupant is unlikely to feel hardness when sitting, and it is possible to maintain a favorable feeling when seated.

In addition, in the layered parts 11 and 12, when the aspect ratio gradually changes in the vertical direction Y, it is possible to prevent a part in which the hardness significantly varies from occurring in parts positioned between the side of the seating surface 1A and the side of the back surface 1B in the layered parts 11 and 12, and an occupant is unlikely to feel discomfort when seated.

In addition, a horizontally long foaming cell 21 is likely to be compressed and deformed in the vertical direction Y. On the other hand, in such a deformed state, since shear deformation is unlikely to occur in the lateral direction X, in the layered parts 11 and 12, it is possible to make it difficult for the side of the seating surface 1A to deform in the lateral direction, and it is possible to reliably prevent a person sitting or an object mounted on the seating surface 1A from shaking in the lateral direction X. Therefore, even if an acceleration in the lateral direction X is applied to a person or an object on the seating surface 1A, it can be stabilized.

Moreover, at the boundaries C1 and A2 between the layered parts 11 and 12 adjacent to each other in the vertical direction Y, since the aspect ratio of the foaming cells 21C included in the layered part 11 on the side of the seating surface 1A is lower than the aspect ratio of the foaming cells 21A included in the layered part 12 on the side of the back surface 1B, when a compressive load in the vertical direction Y is applied to the seating surface 1A, at the boundaries C1 and A2, a horizontally long foaming cell 21A included in the layered part 12 on the side of the back surface 1B is compressed and deformed in the vertical direction Y. Therefore, it is possible to prevent a vertically long foaming cell 21C included in the layered part 11 on the side of the seating surface 1A from collapsing in the vertical direction Y. Accordingly, even if the thickness of the seat pad 1 in the vertical direction Y is reduced, it is possible to prevent all or a large number of foaming cells 21 included from collapsing, and it is possible to prevent an occupant from experiencing a so-called feeling of bottom touching in which he or she feels hardness when seated.

In addition, in the layered parts 11 and 12 adjacent to each other in the vertical direction Y, since the hardness of the entire layered part 12 on the side of the back surface 1B in the vertical direction Y is higher than the hardness of the entire layered part 11 on the side of the seating surface 1A in the vertical direction Y, an amount of compression and deformation occurring in the layered part 12 on the side of the back surface 1B is lower than an amount of compression and deformation occurring in the layered part 11 on the side of the seating surface 1A, and compression and deformation occurring in the layered part 11 on the side of the seating surface 1A can be supported by the layered part 12 on the side of the back surface 1B.

In addition, since the hardness in the vertical direction Y differs for each of the layered parts 11 and 12, it is possible to easily set a rate of change of a density for each of the layered parts 11 and 12 in the vertical direction Y to be high. In the seat pad 1, it is possible to easily ensure a large difference between the hardness of the upper end A1 on the side of the seating surface 1A in the vertical direction Y and the hardness of the lower end C2 on the side of the back surface 1B in the vertical direction Y.

Accordingly, it is possible to reliably reduce the above-described shakiness and feeling of bottom touching.

In addition, at the boundaries C1 and A2 between the layered parts 11 and 12 adjacent to each other in the vertical direction Y, since the hardness of the layered part 11 on the side of the seating surface 1A in the vertical direction Y is equal to or lower than the hardness of the layered part 12 on the side of the back surface 1B in the vertical direction Y, within the seat pad 1, from the seating surface 1A toward the back surface 1B in the vertical direction Y, the occurrence of a part in which the hardness in the vertical direction Y is reversed and significantly varies is prevented, the hardness can substantially continuously increase, and it is possible to reliably prevent an occupant from experiencing discomfort when seated.

In addition, since the aspect ratio of the foaming cells 21C included in the lower end C2 on the side of the back surface 1B in the seat pad 1 is a value of 0.95 to 1.05 that is close to 1, the foaming cell 21C is unlikely to be deformed even if a force is applied in any direction, it is possible to further reduce shakiness, it is possible to prevent the foaming cell 21C from collapsing in the vertical direction Y, and it is possible to more reliably reduce the occurrence of the above-described feeling of bottom touching.

In addition, since the aspect ratio of the foaming cells 21A included in the upper end A1 on the side of the seating surface 1A in the seat pad 1 is 1.4 to 1.5, it is possible to reduce an amount of sinking of the seat pad 1 in the vertical direction Y without causing an occupant to feel hardness when sitting.

### (Examples)

A urethane blended stock solution prepared by mixing a solution in which a polyol component having the formulation shown in Table 1 was blended in and an isocyanate component was injected into the cavity C of the mold 3 and subjected to foam-molding to produce layered parts. The size of the layered parts in the vertical direction Y was set to 42.5 mm, and the above-described aspect ratio and hardness were measured.

Here, the formulation in Table 1 shows composition proportions of a material a, a material b, and a material c. Table 2 shows configurations of Example 1 and Example 2, and a comparative example.

**[Table 1]**

| Content | | | Material a | Material b | Material c |
|---|---|---|---|---|---|
| Polyol | Polyether polyol (A1-1) | | 100 | 100 | - |
| | Polyether polyol (A1-2) | | - | - | 45 |
| | Polymer polyol (A2-1) | | - | - | 45 |
| Cross-linking agent (C-1) | | | - | - | 6.5 |
| Cross-linking agent (C-2) | | | 1 | 1 | 3.5 |
| Cross-linking agent (C-3) | | | 1 | 1 | - |
| Catalyst (D-1) | | | 0.9 | 0.9 | - |
| Catalyst (D-2) | | | - | - | 0.4 |
| Catalyst (D-3) | | | - | - | 0.2 |
| Catalyst (D-4) | | | - | - | 0.3 |
| Foam stabilizer (E-1) | | | 0.4 | 0.4 | - |
| Foam stabilizer (E-2) | | | - | - | 1 |
| Foaming agent (F-1) | | | 3.3 | 3.3 | 2.4 |
| Sum (unit: parts by mass) | | | 106.6 | 106.6 | 104.3 |
| Isocyanate (unit: equivalents) | | Polyisocyanate (B-1) | 84 | 95 | - |
| | | Polyisocyanate (B-2) | - | - | 86 |

**[Table 2]**

| | Example 1 | Example 2 | Comparative example |
|---|---|---|---|
| Structure of seat pad | Laminate of layered part 11 and layered part 12 | Laminate of layered part 11 and layered part 12 | Single layer of only layered part 11 |
| Layered part 11 | Material a | Material a | Material c |
| Layered part 12 | Material a | Material b | - |
| Size in vertical direction Y | 95 mm | 95 mm | 95 mm |

Before the measurement, a plurality of evaluation samples were extracted from the layered parts.

Specifically, in the layered part in the vertical direction Y, from a part positioned directly below a hip point, four cubic evaluation samples with a length of 10 mm×a width of 10 mm×a height of 10 mm were extracted at different positions in the vertical direction Y.

Here, in the layered parts, when an end surface on the side of the seating surface 1A of the seat pad 1 was represented by a vertical position of 0% and an end surface on the side of the back surface 1B of the seat pad 1 was represented by a vertical position of 100%, the four evaluation samples were separately extracted at a vertical position of 10.5%, 31.6%, 52.6%, and 73.7% in the layered parts.

First, a method of measuring an aspect ratio will be described.

Pictures of central parts of the evaluation samples enlarged by an optical microscope were acquired, and a plurality of vertical lines that equally divided the picture at intervals of 2 mm in the lateral direction X and a plurality of horizontal lines that equally divided the picture at intervals of 2 mm in the vertical direction Y were assigned. In this case, one of the plurality of vertical lines and one of the plurality of horizontal lines passed through the center of the picture. A vertical line and a horizontal line that pass through the center of the picture will be referred to below as a vertical reference line and a horizontal reference line.

Thus, regarding the vertical reference line and a pair of vertical lines with the vertical reference line interposed therebetween in the lateral direction X, within a range 3 mm vertically away from the horizontal reference line, the number of intersections with a skeleton that defined a foaming cell was visually counted. An average value of the numbers of intersections counted along the vertical lines was calculated, and the average value was assumed to be the size Ry of the foaming cell 21 in the vertical direction Y.

In addition, similarly, in the lateral direction, regarding the horizontal reference line and a pair of horizontal lines with the horizontal reference line interposed therebetween in the vertical direction Y, within a range 5 mm horizontally away from the vertical reference line, the number of intersections with the skeleton was counted. An average value of the numbers of intersections counted along the horizontal lines was calculated, and the average value was assumed to be the size Rx of the foaming cell 21 in the lateral direction X.

The aspect ratio was specified by dividing the Rx value by the Ry value obtained as above.

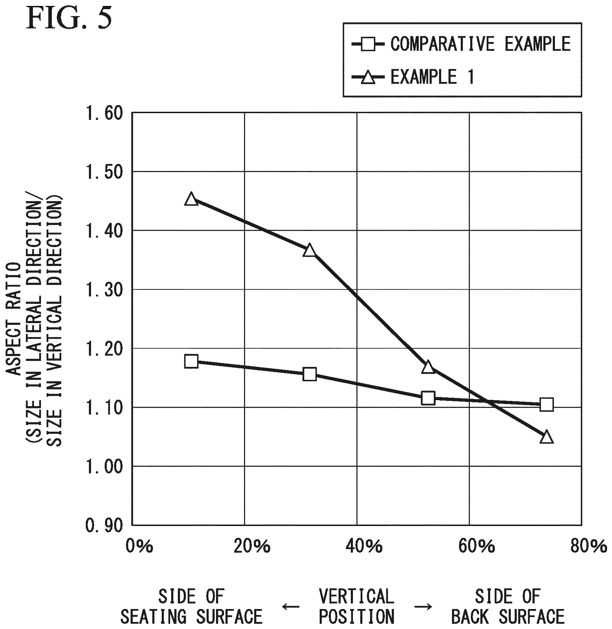

Fig. 5 shows an example of results of the aspect ratios of the plurality of foaming cells 21 included in the layered parts obtained on the basis of such a measurement method.

As a result, layered parts obtained by blending a material a and a material b had an aspect ratio of 1.45, 1.37, 1.17, and 1.05 from the side of the seating surface 1A toward the side of the back surface 1B. Layered parts obtained by blending a material c had an aspect ratio of 1.18, 1.16, 1.12, and 1.10 from the side of the seating surface toward the side of the back surface.

As shown in Fig. 5, in the layered parts obtained by blending a material a and a material b, compared to the layered part obtained by blending a material c, the aspect ratio showed an increasing trend of a declining rate from the side of the seating surface 1A toward the side of the back surface 1B in the vertical direction Y.

Next, a method of measuring hardness will be described.

Regarding the four evaluation samples, first, a pressing plate was moved forward to the evaluation sample until a reaction force received by the pressing plate reached 0.1 N, and this position was set as an initial position of the pressing plate at which the thickness of the evaluation sample was 100%. The pressing plate was a disk with a diameter of 200 mm, and through-holes with a diameter of 6 mm were formed at a pitch of 19 mm in a receiving plate on which the evaluation sample was mounted.

Next, the pressing plate was moved forward at a speed of 50 mm/min to the evaluation sample. When the thickness of the evaluation sample reached 25%, the pressing plate was returned to the initial position at a speed of 50 mm/min. Then, after waiting for 60 seconds, again, the pressing plate was moved forward at a speed of 50 mm/min toward the evaluation sample. When the thickness of the evaluation sample reached 25%, the pressing plate was returned to the initial position at a speed of 50 mm/min.

In the above procedure, when the evaluation sample was compressed and deformed by 25% (when the thickness reached 75%), a value of stress applied to the evaluation sample was specified and this value was set as the hardness.

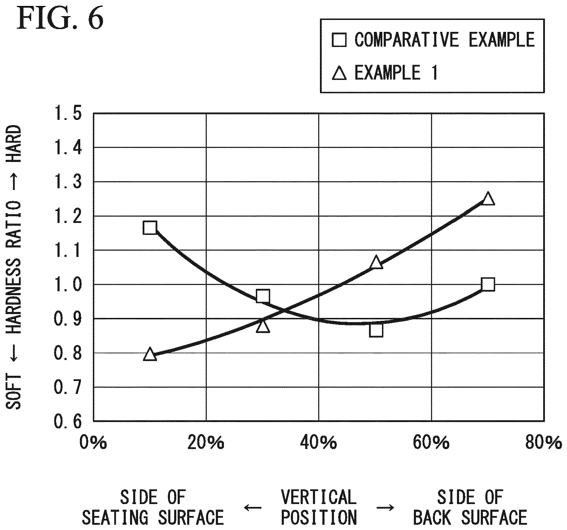

Then, an average of the hardnesses in the four evaluation samples was calculated and a ratio of the hardness of each of the evaluation samples with respect to the average value was calculated. That is, the hardness ratio refers to a ratio of the hardness of each of the evaluation samples with respect to the average hardness in the vertical direction Y in the layered parts 11 and 12. As a result, Fig. 6 shows a graph in which the horizontal axis represents a position in the vertical direction Y and the vertical axis represents a hardness ratio.

The hardness ratio of the layered part obtained by blending a material a and a material b was 0.80, 0.88, 1.07, and 1.25 from the side of the seating surface 1A toward the side of the back surface 1B, and the hardness ratio of the layered part obtained by blending a material c was 1.17, 0.96, 0.87, and 1.00 from the side of the seating surface toward the side of the back surface.

As shown in the graph in Fig. 6, the layered part obtained by blending a material a and a material b had the hardness in the vertical direction Y that continuously increased from the side of the seating surface 1A toward the side of the back surface 1B. That is, the hardness distribution in the vertical direction Y showed a continuously increasing trend. As a result, in Example 1 and Example 2, reduction in a feeling of shakiness required for the seat pad 1 was sufficiently reduced. In addition, since the hardness ratio on the side of the seating surface 1A in the layered part 11 was relatively small, a repulsive force when sitting was appropriate, and since a feeling of pressure from the seating surface 1A in the layered part 11 was slight, seating comfort that was different from that in the related art was obtained.

At least one factor among inclusion of a large amount of glycerol as a cross-linking agent in the foaming stock solution of the soft polyurethane foam, inclusion of an EO-based cross-linking agent as a main cross-linking agent without substantially a PO-based cross-linking agent being contained, inclusion of a resin catalyst as a main catalyst, and substantial lack of a foam stabilizer was thought to cause the hardness distribution of the layered part obtained by blending a material a and a material b.

On the other hand, as can be seen from the graph in Fig. 6, in the layered part of the comparative example, the hardness ratio of the evaluation sample at a vertical position of 31.6% positioned immediately below the evaluation sample was lower than the hardness ratio of the evaluation sample at a vertical position of 10.5% close to the end surface on the side of the seating surface. In such a hardness distribution, when a centrifugal acceleration G was applied in the lateral direction X, a sensation of horizontal deviation of the soft polyurethane foam occurred in the intermediate part deeper than the upper end close to the seating surface, and a feeling of shakiness was likely to occur.

At least one factor among lack of glycerin as a cross-linking agent in the foaming stock solution of the soft polyurethane foam, inclusion of a large amount of a PO-based cross-linking agent as a cross-linking agent, and inclusion of a large amount of a foaming catalyst as a catalyst was thought to cause the hardness distribution of the layered part of the comparative example.

Next, a seat pad including the layered part 11 and the layered part 12 whose hardnesses were different was produced. The layered part 12 having a different hardness from the layered part 11 was produced by blending a material b. The hardness of the entire layered part 12 in the vertical direction was higher than the hardness of the entire layered part 11 in the vertical direction.

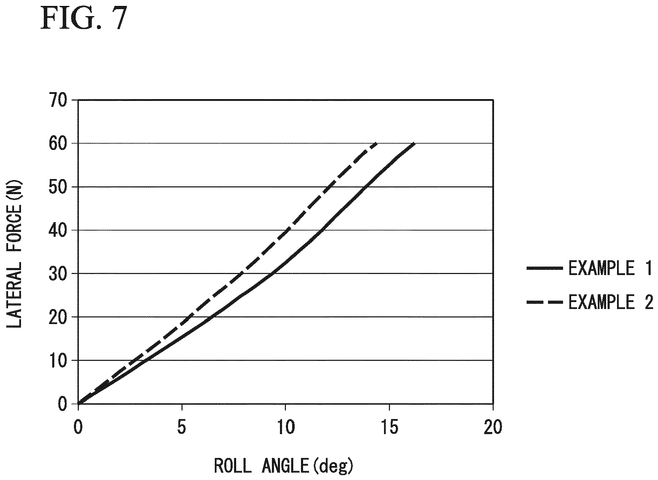

The hardness of the layered part 11 obtained by blending a material a was 199 (N), and the hardness of the layered part 12 obtained by blending a material b was 259 (N). Therefore, Example 2 had less of a feeling of bottom touching than Example 1. Fig. 7 shows a relationship between the lateral force (N) and the roll angle (deg) in the seat pad (Example 1) in which the hardness of the entire layered part 11 in the vertical direction was the same as the hardness of the entire layered part 12 in the vertical direction and the seat pad (Example 2) in which the hardness of the entire layered part 12 in the vertical direction was higher than the hardness of the entire layered part 11 in the vertical direction. The roll angle (deg) is a tilt angle when a 39.8 kg iron plate was loaded on the side of the seating surface 1A of the seat pad and a load was gradually applied from 0 to 60 N in the horizontal direction.

It can be understood in Fig. 7 that a value of the lateral force with respect to the roll angle is high and Example 2 is less shaky than Example 1. That is, it can be understood that, when the layered part on the side of the back surface had a higher hardness, a feeling of shakiness was reduced.

Here, details of materials indicated by model numbers or names in Table 1 are as follows.

The "polyether polyol A1-1" had an EO/PO molar ratio of 16/84, a weight-average molecular weight of 7000, and four functional groups.

The "polyether polyol A1-2" has an EO/PO molar ratio of 13/87, a weight-average molecular weight of 7000, and three functional groups.

The "polymer polyol A2-1" was a 3.2 functional polymer polyol (product name: KC855 commercially available from Sanyo Chemical Industries, Ltd.) having had a solid content of 33%, a hydroxyl value of 23 mgKOH/g, and a weight-average molecular weight of 5400.

The "cross-linking agent C-1" had an EO/PO molar ratio of 0/100, a weight-average molecular weight of 700, and three functional groups.

The"cross-linking agent C-2" had an EO/PO molar ratio of 100/0, a weight-average molecular weight of 400, and four functional groups.

The "cross-linking agent C-3" was glycerin.

The "Catalyst D-1" was 1,1'-(3-(dimethylamino)propyl)imino)bis(2-propanol) that is a commercially available resin catalyst.

The "Catalyst D-2" was triethylenediamine that is a commercially available resin catalyst.

The "Catalyst D-3" was (2-dimethylaminoethyl)ether that is a commercially available foaming catalyst.

The "Catalyst D-4" was a commercially available diethanolamine that catalyzes both resinification and foaming.

The "Foam stabilizer E-1" was a low active type silicone foam stabilizer (product name: B8734 commercially available from Evonik Industries).

The "Foam stabilizer E-2" was a high active type silicone foam stabilizer (product name: B8742 commercially available from Evonik Industries).

The "Foaming agent F-1" was water.

The "Polyisocyanate (B-1)" was an MDI-based isocyanate referred to as "Foam Lite1302B" commercially available from BASF INOAC. TDI-based isocyanate was substantially not contained.The "Polyisocyanate (B-2)" was TDI-based isocyanate that is commercially available polyisocyanate and mixed at a mass ratio of TDI/MDI=80/20.

Here, the technical scope of the present invention is not limited to the above embodiment and various modifications can be made without departing from the scope of the present invention as defined in the claims.

For example, in the present embodiment, not only can a person sit on the soft polyurethane foam molded article, but also an object and the like may be mounted thereon.

In addition, the soft polyurethane foam molded article is not limited to a configuration in which the mounting surface extends in the horizontal direction perpendicular to the vertical direction like the seating surface 1A of the present embodiment, but can be used for various applications having, for example, a configuration in which the mounting surface extends in the vertical direction.

In addition, without departing from scope of the present invention. as defined in the claims, components in the above-described embodiment can be appropriately replaced with well-known components.

In the present invention, the shapes of a plurality of foaming cells included in a plurality of layered parts are horizontally long as they are positioned closer to the side of the mounting surface in the vertical direction. Therefore, in the plurality of layered parts, a relatively horizontally long foaming cell that is likely to be compressed and deformed in the vertical direction is positioned closer to the side of the mounting surface. On the other hand, a relatively vertically long foaming cell that is unlikely to be compressed and deformed in the vertical direction is positioned closer to the side of the back surface opposite to the side of the mounting surface in the vertical direction.

Therefore, in the layered parts, it is possible to set the hardness on the side of the mounting surface to be lower than the hardness on the side of the back surface. For example, when the seat pad is mounted in a vehicle, an occupant is unlikely to feel hardness when sitting, and it is possible to maintain a favorable feeling when seated.

In addition, in the layered parts, when the ratio gradually changes in the vertical direction, it is possible to prevent a part in which the hardness significantly varies from occurring in parts positioned between the side of the mounting surface and the side of the back surface in the layered parts and an occupant is unlikely to feel discomfort when seated.

In addition, a horizontally long foaming cell is likely to be compressed and deformed in the vertical direction. On the other hand, in such a deformed state, since shear deformation is unlikely to occur in the lateral direction, in the layered parts, it is possible to make it difficult for the side of the mounting surface to deform in the lateral direction, and it is possible to reliably prevent a person sitting or an object mounted on the mounting surface (seating surface) from shaking in the lateral direction. Therefore, even if an acceleration in the lateral direction is applied to a person or an object on the mounting surface, it can be stabilized.

Moreover, at boundaries between layered parts adjacent to each other in the vertical direction, since the ratio of foaming cells included in the layered part on the side of the mounting surface is lower than the ratio of the foaming cell included in the layered part on the side of the back surface, when a compressive load in the vertical direction is applied to the mounting surface, at the boundaries, a horizontally long foaming cell included in the layered part on the side of the back surface is compressed and deformed in the vertical direction. Therefore, it is possible to prevent a vertically long foaming cell included in the layered part on the side of the mounting surface from collapsing in the vertical direction. Accordingly, even if the thickness of the soft polyurethane foam molded article in the vertical direction is reduced, it is possible to prevent all or a large number of foaming cells included from collapsing, and it is possible to prevent an occupant from experiencing a so-called feeling of bottom touching in which he or she feels hardness when seated.

Here, in the layered parts adjacent to each other in the vertical direction, the hardness of the entire layered part on the side of the back surface in the vertical direction may be higher than the hardness of the entire layered part on the side of the mounting surface in the vertical direction.

In this case, between the layered parts adjacent to each other in the vertical direction, since the hardness of the entire layered part on the side of the back surface in the vertical direction is higher than the hardness of the entire layered part on the side of the mounting surface in the vertical direction, an amount of compression and deformation occurring in the layered part on the side of the back surface is lower than an amount of compression and deformation occurring in the layered part on the side of the mounting surface, and compression and deformation occurring in the layered part on the side of the mounting surface can be supported by the layered part on the side of the back surface.

In addition, since the hardness in the vertical direction differs for each of the layered parts, it is possible to easily set a rate of change of a density for each of the layered parts in the vertical direction to be high. In the soft polyurethane foam molded article, it is possible to easily ensure a large difference between the hardness of the end on the side of the mounting surface in the vertical direction and the hardness of the end on the side of the back surface in the vertical direction.

Accordingly, it is possible to reliably reduce the above-described shakiness and feeling of bottom touching.

In addition, at the boundaries, the hardness of the layered part on the side of the mounting surface in the vertical direction may be equal to or lower than the hardness of the layered part on the side of the back surface in the vertical direction.

In this case, at the boundaries, since the hardness of the layered part on the side of the mounting surface in the vertical direction is equal to or lower than the hardness of the layered part on the side of the back surface in the vertical direction, within the soft polyurethane foam molded article, from the mounting surface toward the back surface in the vertical direction, the occurrence of a part in which the hardness in the vertical direction is reversed and significantly varies is prevented, the hardness can substantially continuously increase, and it is possible to reliably prevent an occupant from experiencing discomfort when seated.

In addition, the ratio of the foaming cell included in the end on the side of the back surface may be 0.95 to 1.05.

In this case, since the ratio of the foaming cell included in the end on the side of the back surface in the soft polyurethane foam molded article is a value that is close to 1, the foaming cell is unlikely to be deformed even if a force in any direction is applied, it is possible to further reduce shakiness, it is possible to prevent the foaming cell from collapsing in the vertical direction, and it is possible to more reliably reduce the occurrence of the above-described feeling of bottom touching.

### [Industrial Applicability]

According to the present invention, it is possible to maintain a favorable feeling when seated, it is possible to improve stability by reducing shakiness, and it is possible to reduce a feeling of bottom touching.

### [Reference Signs List]

1 Seat pad (soft polyurethane foam molded article)
1A Seating surface (mounting surface)
1B Back surface
11, 12 Layered part
21, 21A, 21B, 21C Foaming cell
A1, A2 Upper end
B1, B2 Central part
C1, C2 Lower end
C1, A2 Boundary
Ry Size of foaming cell in vertical direction
Rx Size of foaming cell in lateral direction
X Lateral direction
Y Vertical direction

## Claims

1. A seat pad (1) that is attachable to a vehicle for use as a seating part,
wherein the seat pad is a soft polyurethane foam molded article (1) that has a mounting surface (1A) and is obtainable by foam-molding a foaming stock solution, the soft polyurethane foam molded article (1) comprising:
a plurality of layered parts (11, 12) that form layers in a vertical direction perpendicular to the mounting surface (1A),
**characterised in that** a plurality of foaming cells (21, 21A, 21B, 21C) included in each of the layered parts (11, 12) have a ratio of a size (Rx) in a lateral direction along the mounting surface (1A) with respect to a size (Ry) in the vertical direction that becomes larger as the foaming cells (21, 21A, 21B, 21C) become positioned closer to the side of the mounting surface (1A) in the vertical direction, and
wherein, at boundaries (C1, A2) between the layered parts (11, 12) adjacent to each other in the vertical direction, the ratio of a foaming cell (21, 21A, 21B, 21C) included in the layered part (11) on the side of the mounting surface (1A) is lower than the ratio of a foaming cell (21, 21A, 21B, 21C) included in the layered part (12) positioned closer to the side of a back surface (1B) opposite to the side of the mounting surface (1A).

2. The seat pad (1) according to Claim 1,
wherein, between the layered parts (11, 12) adjacent to each other in the vertical direction, the hardness of the entire layered part (12) on the side of the back surface (1B) in the vertical direction is higher than the hardness of the entire layered part (11) on the side of the mounting surface (1A) in the vertical direction.

3. The seat pad (1) (1) according to Claim 1 or 2,
wherein, at the boundaries (C1, A2), the hardness of the layered part (11) on the side of the mounting surface (1A) in the vertical direction is equal to or lower than the hardness of the layered part (12) on the side of the back surface (1B) in the vertical direction.

4. The seat pad (1) (1) according to any one of Claims 1 to 3,
wherein the ratio of a foaming cell (21, 21A, 21B, 21C) included in an end (C1, C2) on the side of the back surface (1B) is 0.95 to 1.05.

## Patentansprüche

1. Sitzkissen (1), welches an einem Fahrzeug zum Gebrauch als ein Sitzteil befestigt werden kann,
wobei das Sitzkissen ein weicher Polyurethanschaum-Formartikel (1) ist, welcher eine Montagefläche (1A) besitzt und durch Schaumformen einer schäumenden Vorratslösung erzielt werden kann, wobei der weiche Polyurethanschaum-Formartikel (1) Folgendes beinhaltet:
eine Vielzahl von geschichteten Teilen (11, 12), welche Schichten in einer vertikalen Richtung bilden, welche rechtwinklig zur Montagefläche (1A) liegt,
**dadurch gekennzeichnet, dass** eine Vielzahl von schäumenden Zellen (21, 21A, 21B, 21C), welche in jedem der geschichteten Teile (11, 12) enthalten sind, ein Größenverhältnis (Rx) in einer seitlichen Richtung entlang der Montagefläche (1A) in Bezug auf eine Größe (Ry) in der vertikalen Richtung besitzen, welches größer wird, je näher die schäumenden Zellen (21, 21A, 21B, 21C) an der Seite der Montagefläche (1A) in der vertikalen Richtung positioniert sind, und
wobei an Grenzen (C1, A2) zwischen den geschichteten Teilen (11, 12), welche in der vertikalen Richtung aneinandergrenzen, das Verhältnis einer schäumenden Zelle (21, 21A, 21B, 21C), welche in dem geschichteten Teil (11) an der Seite der Montagefläche (1A) enthalten ist, kleiner ist als das Verhältnis einer schäumenden Zelle (21, 21A, 21B, 21C), welche in dem geschichteten Teil (12) enthalten ist, welcher näher an der Seite einer hinteren Fläche (1B), welche der Seite der Montagefläche (1A) abgewandt ist, positioniert ist.

2. Sitzkissen (1) nach Anspruch 1,
bei welchem, zwischen den geschichteten Teilen (11, 12), welche in der vertikalen Richtung aneinandergrenzen, die Härte des gesamten geschichteten Teils (12) an der Seite der hinteren Fläche (1B) in der vertikalen Richtung höher als die Härte des gesamten geschichteten Teils (11) an der Seite der Montagefläche (1A) in der vertikalen Richtung ist.

3. Sitzkissen (1) nach Anspruch 1 oder 2,
bei welchem, an den Grenzen (C1, A2), die Härte des geschichteten Teils (11) an der Seite der Montagefläche (1A) in der vertikalen Richtung gleich der oder kleiner als die Härte des geschichteten Teils (12) an der Seite der hinteren Fläche (1B) in der vertikalen Richtung ist.

4. Sitzkissen (1) nach einem der Ansprüche 1 bis 3,
bei welchem das Verhältnis einer schäumenden Zelle (21, 21A, 21B, 21C), welche in einem Ende (C1, C2) an der Seite der hinteren Fläche (1B) enthalten ist, 0,95 bis 1,05 beträgt.

## Revendications

1. Coussin de siège (1) qui peut être fixé sur un véhicule pour une utilisation en tant que partie d'assise,
dans lequel le coussin de siège est un article moulé en mousse de polyuréthane souple (1) qui comporte une surface de montage (1A) et qui peut être obtenu au moyen d'un moulage de mousse d'une solution mère de production de mousse, l'article moulé en mousse de polyuréthane souple (1) comprenant :
une pluralité de parties en couches (11, 12) qui forment des couches dans une direction verticale qui est perpendiculaire à la surface de montage (1A) ;
**caractérisé en ce qu'**une pluralité de cellules de production de mousse (21, 21A, 21B, 21C) qui sont incluses dans chacune des parties en couches (11, 12) présentent un rapport d'une dimension (Rx) dans une direction latérale le long de la surface de montage (1A) par rapport à une dimension (Ry) dans la direction verticale qui devient plus grand lorsque les cellules de production de mousse (21, 21A, 21B, 21C) en viennent à être positionnées plus du côté de la surface de montage (1A) dans la direction verticale ; et
dans lequel, à des frontières (C1, A2) entre les parties en couches (11, 12) qui sont adjacentes les unes aux autres dans la direction verticale, le rapport d'une cellule de production de mousse (21, 21A, 21B, 21C) qui est incluse dans la partie en couches (11) sur le côté de la surface de montage (1A) est inférieur au rapport d'une cellule de production de mousse (21, 21A, 21B, 21C) qui est incluse dans la partie en couches (12) qui est positionnée plus près du côté d'une surface arrière (1B) qui est opposé au côté de la surface de montage (1A).

2. Coussin de siège (1) selon la revendication 1,
dans lequel, entre les parties en couches (11, 12) qui sont adjacentes les unes aux autres dans la direction verticale, la dureté de la partie en couches complète (12) sur le côté de la surface arrière (1B) dans la direction verticale est plus élevée que la dureté de la partie en couches complète (11) sur le côté de la surface de montage (1A) dans la direction verticale.

3. Coussin de siège (1) selon la revendication 1 ou 2,
dans lequel, aux frontières (C1, A2), la dureté de la partie en couches (11) sur le côté de la surface de montage (1A) dans la direction verticale est égale ou inférieure à la dureté de la partie en couches (12) sur le côté de la surface arrière (1B) dans la direction verticale.

4. Coussin de siège (1) selon l'une quelconque des revendications 1 à 3,
dans lequel le rapport d'une cellule de production de mousse (21, 21A, 21B, 21C) qui est incluse dans une extrémité (C1, C2) sur le côté de la surface arrière (1B) est de 0,95 à 1,05.
